Europäisches Patentamt

European Patent Office

Office européen des brevets

(11) Publication number: **0 655 689 A2**

# EUROPEAN PATENT APPLICATION

(21) Application number: **95102266.4**

(22) Date of filing: **17.02.88**

(51) Int. Cl.⁶: **G06F 12/08**

This application was filed on 17 - 02 - 1995 as a divisional application to the application mentioned under INID code 60.

(30) Priority: **18.02.87 JP 33495/87**
**17.03.87 JP 60207/87**

(43) Date of publication of application:
**31.05.95 Bulletin 95/22**

(60) Publication number of the earlier application in accordance with Art.76 EPC: **0 279 421**

(84) Designated Contracting States:
**DE FR GB**

(71) Applicant: **NEC CORPORATION**
**7-1, Shiba 5-chome**
**Minato-ku**
**Tokyo (JP)**

(72) Inventor: **Mori, Toshikatsu**
**c/o NEC Corporation,**
**7-1, Shiba 5-chome**
**Minato-ku,**
**Tokyo (JP)**

(74) Representative: **VOSSIUS & PARTNER**
**Siebertstrasse 4**
**D-81675 München (DE)**

(54) **Cache memory control system.**

(57) A cache memory control system includes a circuit for clearing valid bits of data and address data, both of which are stored in a cache memory (20), a circuit (1) for outputting a signal representing valid bits are being cleared, and a circuit for changing the cache memory (20) from cache access status to cache bypass status in response to the signal representing that the valid bits are being cleared.

F I G.1

The present invention relates to a cache memory control system.

Cache memories are small-capacity, high-speed buffer memories arranged between processors and main memories and are very popular in medium and high speed computer systems for effectively shortening main memory access time under the control of processors.

The principle of cache memories is described in detail in Computing Survey, Vol. 14, No. 3, PP. 473 - 530, 1982 and is based on an empirical rule wherein "locality" is present in main memory access, i.e., referencing of a main memory address space by a program.

The above reference describes "locality means that the loci of reference of the program in the near feature are likely to be near the current loci of reference." By utilizing this property of locality, the contents of successive memory locations (to be referred to as a block) having a predetermined size and including a word currently accessed from the CPU to the main memory are fetched from the main memory to the cache memory. Only high-speed cache memory access is then required, and low-speed main memory access need not be performed.

Conventional cache memories have the following disadvantages.

Each entry of the cache memory consists of data, an address tag representing a data location in the main memory or a real address, and a valid bit representing validity of the data. Since the cache memory comprises a random access memory (RAM), valid bits of all entries must be cleared when the cache memory system is powered or the virtual address space is changed. A conventional cache memory system includes a controller which controls the clearing of all the valid bits in accordance with a power-on signal or an instruction from the processor and acknowledges the end of clearing to the processor. The processor starts using the cache memory in response to a clear end acknowledgement signal from the controller. In this valid bit clear control system, the end of the clearing must be detected by the processor and the processor determines whether the cache memory can be accessed, thus undesirably increasing the overhead of the processor.

It is an object of the present invention to provide a cache memory control system for decreasing the overhead during the operation of a cache memory under the control of a processor when a memory is powered or a virtual address space is changed.

This object is achieved by a cache memory control system according to an aspect of the present invention comprises: a small-capacity cache memory arranged between a processor and a main memory to effectively shorten access time; status changing means for changing status of memory data access performed by the processor into cache access status for using the cache memory or cache bypass status for bypassing the cache memory; means for storing valid bits for representing validity of data and address information, both of which are stored in the cache memory; means for clearing the valid bits; means for outputting a signal representing that the valid bits are being cleared; and means for changing the status changing means to the cache bypass status in response to the signal from the signal outputting means.

Preferred embodiments of the present invention will be described in detail with reference to the accompanying drawings, in which:

Fig. 1 is a block diagram of a cache memory control system according to an embodiment of the present invention; and

Figs. 2(A) to 2(F) are timing charts showing waveforms of signals in the main parts in the circuit shown in Fig. 1 .

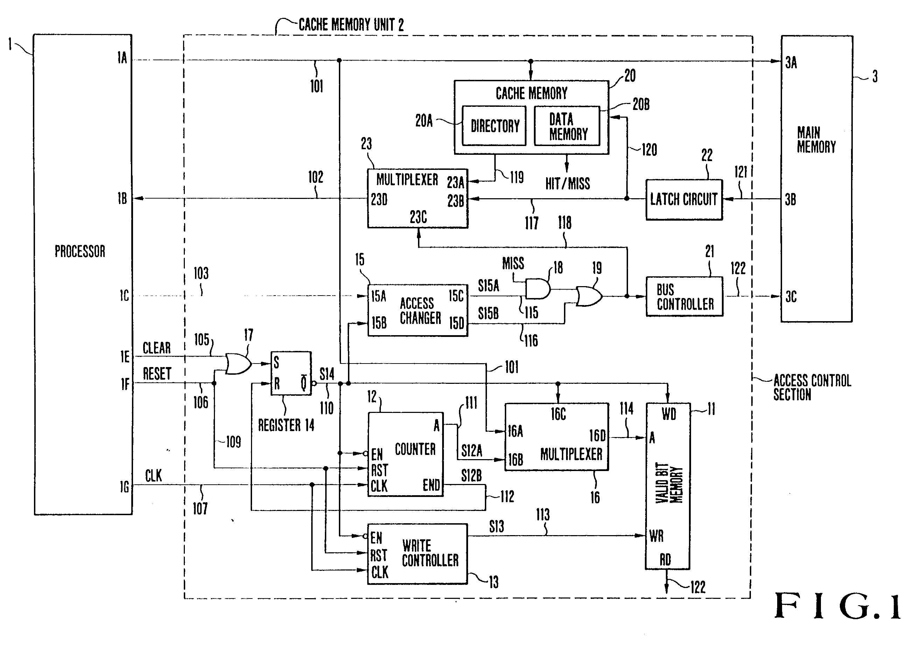

Referring to Fig. 1, a cache memory unit 2 including a cache memory 20 is connected between a processor 1 and a main memory 3. The cache memory 20 includes a directory 20A and a data memory 20B and is connected to an address bus 101 for connecting a terminal 1A of the processor 1 to a terminal 3A of the main memory 3. An output of the cache memory 20 is connected to a terminal 23A of a multiplexer 23 through a line 119.

A data bus 121 of the main memory 3 is connected to the input terminal of the cache memory 20 and an input terminal 23B of the multiplexer 23 through a latch circuit 22. The multiplexer 23 selects the signal input to the input terminal 23A or 23B in response to a control signal input to a control terminal 23C. The selected signal is output from an output terminal 23D to a data bus 102 of the processor 1.

An output terminal 1C for a signal representing access status of the processor 1 is connected to an input terminal 15A of an access changer 15 through a line 103. The access changer 15 activates the output signal from a terminal 15C or 15D in response to a control signal supplied to a control terminal 15B. The output terminal 15C of the access changer 15 is connected to one input terminal of an AND gate 18, and the output terminal 15D is connected to one input terminal of an OR gate 19. The other input terminal of the AND gate 18 receives a signal MISS representing that data requested by the processor 1 is not stored in the cache memory 20. An output from the AND gate 18 is input to the other input terminal of the OR gate 19. An output from the OR gate 19 is input to the control terminal 23C of the multiplexer 23 through a line 118 and a bus controller 21. The bus controller 21 is connected to a control terminal 3C of the main memory 3 through a line 122.

Reference numeral 11 denotes a valid bit memory for storing valid bits; 12, a counter for counting addresses for data to be cleared in the valid bit memory 11; 13, a write controller for controlling write access of the valid bit memory 11; and 14, a register for maintaining a predetermined state during clearing. Although the valid bit memory 11 is part of the directory 20A in the cache memory 20, the memory 11 is separately shown for the illustrative convenience.

The address bus 101 of the processor 1 which outputs an address signal for the valid bit memory 11 is connected to one input terminal 16A of the multiplexer 16 through a line 104. The other input terminal 16B, a control terminal 16C, and an output terminal 16D of the multiplexer 16 are respectively connected to an output terminal A of the counter 12 through a line 111, an output terminal $\overline{Q}$ of the register 14 through a line 110, and an input terminal A of the valid bit memory 11 through a line 114. The multiplexer 16 selects the signal input to the input terminal 16A or 16B in response to a control signal S14 supplied to the control terminal 16C. The selected signal is output from the output terminal 16D. The control signal S14 output from the register 14 through the line 110 is also supplied to enable terminals EN of the counter 12 and the write controller 13 and to a control terminal WD of the valid bit memory 11.

A clear command signal CLEAR output from an output terminal 1E of the processor 1 and representing clearing of the valid bit memory 11 is input to one input terminal of an OR gate 17. A reset signal RESET output from an output terminal 1F of the processor 1 is input to the other input terminal of the OR gate 17 and to a reset terminal RST of the counter 12. The output terminal of the OR gate 17 is connected to a set terminal S of the register 14. A reset terminal R of the register 14 is connected to a terminal END of the counter 12 through a line 112. The terminal END outputs a signal S12B representing the end of counting of the counter 12.

An output terminal 1G for a clock signal CLK of the processor 1 is connected to clock terminals CLK of the counter 12 and the write controller 13 through a line 107.

An output signal S13 from the write controller 13 is supplied to a write terminal WR of the valid bit memory 11. A read terminal RD of the valid bit memory 11 is connected to a HIT/MISS signal generator (not shown) in the cache memory 20 through the line 122.

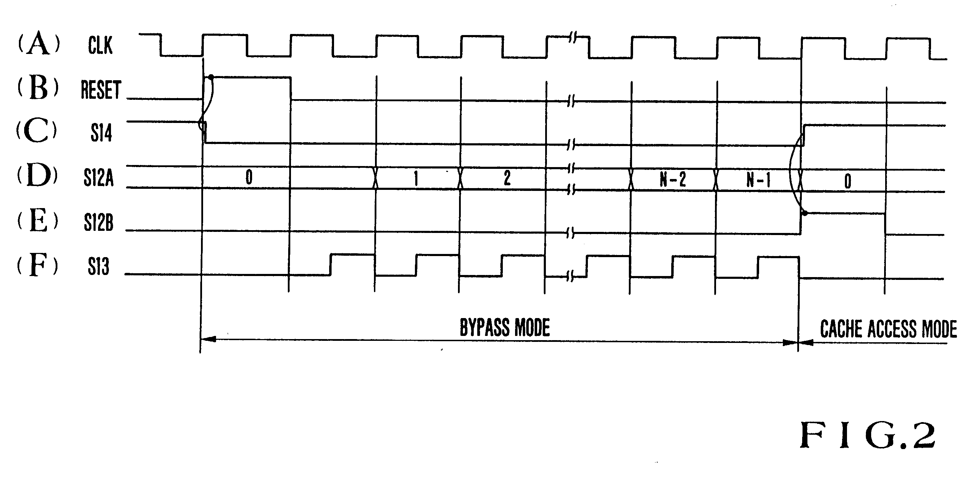

The operation of the circuit shown in Fig. 1 will be described with reference to Figs. 2(A) to 2(F) representing waveforms of signals in main parts in the circuit.

When the clear command CLEAR or the reset signal RESET is not output from the processor 1, the register 14 is maintained in the reset state, and its $\overline{Q}$ output signal S14 is set at high level ("H"). In this case, the cache access mode is set. In this mode, the write controller 13 is kept disabled. An address signal for the valid bit memory 11 is supplied from the terminal 1A of the processor 1 through the multiplexer 16. At the same time, the access changer 15 sets an output signal S15A at "H" level. However, if the signal MISS is not output, an output signal from the AND gate 18 is kept at low level ("L"). Therefore, an output from the OR gate 19 is kept at "L" level. The multiplexer 23 selects the output from the cache memory 20, and the selected signal is output onto the data bus 102 of the processor 1. During this operation, the bus controller 21 inhibits access of the main memory 3. When the signal MISS is generated in the cache access mode, an output from the AND gate 18 and hence an output from the OR gate 19 are sequentially set at "H" level. The multiplexer 23 selects an input at its input terminal 23B. At the same time, the bus controller 21 starts access of the main memory 3. The data from the main memory 3 is supplied onto a line 120 from the latch circuit 22 to update the contents of the cache memory 20.

When a signal HIT is delivered from the cache memory 20, the multiplexer 23 selects data output from the cache memory 20 through the line 119, and the selected data is output onto the processor data bus 102.

The cache bypass mode as the characteristic feature of the present invention will be described below.

When the register 14 is set in response to the reset signal RESET or the clear command CLEAR from the processor 1, its $\overline{Q}$ output, i.e., a signal S14 which represents the clear period enables the counter 12 and the write controller 13. The respective operations of the counter 12 and the write controller 13 are started. An output S12A from the counter 12 is supplied as an address signal to the valid bit memory 11 through the multiplexer 16. A memory location addressed by the signal S12A is cleared by a signal S13 from the write controller 13. Valid bit clearing is completed, the counter 12 outputs the clear end signal S12B. The register 14 is reset in response to the clear end signal S12B, and therefore the counter 12 and the write controller 13 are disabled.

When the output signal S14 from the register 14 is set active, the output terminal 15D of the access changer 15 is set active ("H"). An output from the OR gate 19 is set at "H" level, and the multiplexer 23 selects an input signal at its input terminal 23B. At the same time, the bus controller 21 outputs a control signal to the main memory 3, thereby starting access of the main memory 3.

The data read out from the main memory 3 is latched by the latch circuit 22 and is output onto the processor data bus 102 through a line 117 and the multiplexer 23.

As described above, according to this embodiment, during clearing of the valid bit memory 11, the mode of access of the cache memory 20 by the processor is automatically changed to the bypass mode at the cache memory unit 2 side or to the cache access mode at the end of clearing of the valid bit memory 11. Therefore, the processor 1 can access the cache memory 11 without detecting the end of clearing of the valid bits.

## Claims

1. A cache memory control system comprising: a small-capacity cache memory arranged between a processor and a main memory to effectively shorten access time;

   status changing means for changing status of memory data access performed by said processor into cache access status for using said cache memory or cache bypass status for bypassing said cache memory;

   means for storing valid bits for representing validity of data and address information, both of which are stored in said cache memory;

   means for clearing the valid bits;

   means for outputting a signal representing that the valid bits are being cleared; and

   means for changing said status changing means to the cache bypass status in response to the signal from said signal output means.

2. A system according to claim 1, wherein said clearing means comprises a counter for starting a count operation in response to the signal representing that the valid bits are being cleared, a write controller for starting write access of said valid bit storing means in response to the signal from said signal output means, and a multiplexer, responsive to the signal from said signal output means, for supplying an output from said counter to said valid bit storing means as an address signal.

3. A system according to claim 1 or 2, wherein said signal output means comprises a register which is set in response to a clear command or a reset signal from said processor and which is reset in response to a count end signal from said counter.

FIG.1

| (A) | CLK |
| (B) | RESET |
| (C) | S14 |
| (D) | S12A |
| (E) | S12B |
| (F) | S13 |

BYPASS MODE

CACHE ACCESS MODE

F I G. 2